# EUROPÄISCHE PATENTSCHRIFT

(11) **EP 2 099 342 B1**
(45) Veröffentlichungstag und Bekanntmachung des Hinweises auf die Patenterteilung: **16.06.2010**
(21) Anmeldenummer: 07857800.2
(22) Anmeldetag: 19.12.2007
(51) Int. Cl.: A47J 36/02, A47J 37/06

(54) **METALLISCHES MEHRSCHICHTMATERIAL ZUM EINSATZ ALS HEIZ- ODER KÜHLPLATTE**
METALLIC MULTILAYERED MATERIAL FOR USE AS A HEATING PLATE OR A COOLING PLATE
MATERIAU METALLIQUE MULTICOUCHES POUR L'UTILISATION COMME PLAQUE CHAUFFANTE OU PLAQUE DE REFROIDISSEMENT

(30) Priorität: 20.12.2006 DE 202006019215 U
(43) Veröffentlichungstag der Anmeldung: 16.09.2009
(73) Patentinhaber: Eisfink Max Maier GmbH & Co. KG, 71636 Ludwigsburg (DE)
(72) Erfinder: EBERHARD, Jürgen, 71726 Benningen (DE)
(74) Vertreter: Menges, Rolf
(86) Internationale Anmeldenummer: PCT/EP2007/064177
(87) Internationale Veröffentlichungsnummer: WO 2008/074818

(56) Entgegenhaltungen:
- DE-U1- 20 215 979
- FR-A- 2 534 187
- US-A- 5 694 674
- US-A1- 2004 118 301

## Beschreibung

Die Erfindung betrifft ein metallisches Mehrschichtmaterial der im Oberbegriff des Patentanspruchs 1 angegebenen Art.

Es ist bekannt (DE 201 16 711 U1), aus einem solchen Mehrschichtmaterial, das bevorzugt durch Walzen hergestellt wird, eine Mehrschichtplatte herzustellen und diese als Induktionsgrillplatte einzusetzen. Möglich ist es auch, aus solchem Mehrschichtmaterial eine Kochplatte, ein Kochfeld od. dgl. herzustellen. Dieses bekannte Mehrschichtmaterial hat zwei Deckschichten aus nichtrostendem Stahl, von denen wenigstens eine aus ferritischem Stahl besteht, wird induktiv beheizt und ist üblicherweise symmetrisch aufgebaut. Üblicherweise besteht keine Gefahr, dass sich das Mehrschichtmaterial im Betrieb verzieht, denn die Wärme entsteht bei der induktiven Beheizung in den beiden Deckschichten aus nichtrostendem Stahl. Für den Fall, dass sich die Gefahr doch ergeben sollte, ist es bei einem aus dreischichtigem Metall-Laminat bestehenden Boden von Kochgeschirren bekannt (DE 33 36 736 C2), zur Beibehaltung einer ebenen Anlagefläche an die Wärmequelle die äußeren Deckschichten ungleich dick auszubilden.

Die induktive Beheizung von aus Mehrschichtmaterial aufgebauten Grill-, Kochplatten oder Kochfeldern ist problemlos und inzwischen weit verbreitet. Die induktive Beheizung erfordert aber gegenüber einer Heizung mittels Kontakt oder Strahlung einen größeren technischen Aufwand, der oft nicht erwünscht oder gerechtfertigt ist. Leider kann Mehrschichtmaterial der eingangs genannten Art aber nicht ohne weiteres einfach mit Strahlungs- oder Kontaktwärme beheizt werden. Dabei wird nämlich die untere Deckschicht wesentlich heißer als die obere Deckschicht, so dass Verziehen nicht ausgeschlossen werden kann. Es könnte zwar in Betracht gezogen werden, wie bei dem bekannten Kochgeschirrboden die Deckschichten unterschiedlich dick auszubilden, dann bestünde jedoch immer noch das Problem, dass es zu lange dauert, bis sich die Wärme von der unteren Deckschicht aus durch die innere Schicht hindurch zu der oberen Deckschicht hin ausgebreitet hat. Das gilt selbst dann, wenn als Strahlungsquelle eine Gasflamme eingesetzt wird oder wenn ein leistungsfähiger Strahlungsheizkörper fest an die freie Oberfläche der unteren Deckschicht angepresst wird.

Es ist zwar bereits an sich bekannt (US 2004/0118301 A1), bei einer Grillplatte aus Mehrschichtmaterial die untere Deckschicht perforiert auszubilden, diese Maßnahme ist jedoch nicht ausreichend, um zum Beispiel bei dem Einsatz von Kontaktwärme eine ausreichend schnelle Wärmeausbreitung von der Wärmequelle zu der freien Oberfläche der oberen Deckschicht zu erzielen, ohne dass sich das Mehrschichtmaterial verzieht.

Aufgabe der Erfindung ist es, ein Mehrschichtmaterial der eingangs genannten Art so auszubilden, dass bei Beheizung der unteren Deckschicht durch Strahlungs- oder Kontaktwärme eine schnellere Wärmeausbreitung zu der freien Oberfläche der oberen Deckschicht erzielbar ist, das Mehrschichtmaterial sich dabei aber trotzdem nicht verzieht.

Diese Aufgabe ist erfindungsgemäß bei einem metallischen Mehrschichtmaterial der eingangs genannten Art mit den im Patentanspruch 1 angegebenen Merkmalen gelöst.

Da bei dem Mehrschichtmaterial nach der Erfindung die untere Deckschicht eine Vielzahl von Löchern aufweist, die jeweils wenigstens zum Teil mit Material der inneren Schicht gefüllt sind, liegt im Bereich der Löcher die innere Schicht gegenüber einer zum Beheizen eingesetzten äußeren Wärmequelle frei und kann daher im Bereich der Löcher direkt, also unter Umgehung der unteren Deckschicht, mit Wärme beaufschlagt werden, die sich demgemäß wesentlich schneller zu der oberen Deckschicht hin ausbreiten wird. Entsprechendes gilt, wenn statt einer Wärmequelle zum Beheizen des Mehrschichtmaterials eine Kältequelle zum Kühlen desselben eingesetzt wird. Die Kältequelle kann dabei ein Gebläse zur Kühlung durch Anblasen oder ein Kälteelement zum Kühlen durch Kontaktkühlung sein.

Vorteilhafte Ausgestaltungen der Erfindung bilden die Gegenstände der Unteransprüche.

Wenn in einer Ausgestaltung des Mehrschichtmaterials nach der Erfindung die Löcher mit Material der inneren Schicht bündig ausgefüllt sind, ist es möglich, mit gutem Wirkungsgrad eine Heiz- oder Kühlquelle an die freie Fläche der unteren Deckschicht anzupressen und so Wärme bzw. Kälte durch direkten Kontakt unmittelbar auf die innere Schicht und von dieser aus zu der oberen Deckschicht zu übertragen. Eine Strahlungswärmequelle oder eine Strahlungskältequelle ist in diesem Fall ebenso mit gutem Wirkungsgrad einsetzbar. Darüber hinaus ist eine sicherere und dauerhaftere Befestigung der unteren Deckschicht an der inneren Schicht gewährleistet.

Wenn in einer weiteren Ausgestaltung des Mehrschichtmaterials nach der Erfindung die Löcher jeweils den Umriss eines regelmäßigen Vielecks aufweisen, besteht keine Gefahr, dass die untere Schicht aufgrund der Löcher bei dem Herstellen des Mehrschichtmaterials, das bevorzugt durch Walzen erfolgt, in der einen oder anderen Richtung stärker gedehnt und dadurch verzogen wird. Entsprechendes gilt für den Einsatz des Mehrschichtmaterials im Betrieb.

Wenn in einer weiteren Ausgestaltung des Mehrschichtmaterials nach der Erfindung die Löcher in Spalten und Zeilen gleichmäßig verteilt angeordnet sind, sind die Stege zwischen den Löchern in Spalten- und Zeilenrichtung jeweils ebenfalls rechtwinkelig zueinander und insbesondere geradlinig angeordnet, so dass eine bei dem bevorzugten Herstellen durch Walzen oder im Betrieb auf die Stege ausgeübte Zug- oder Streckbelastung in beiden Richtungen gleich groß sein wird und ein Verziehen nicht zu befürchten ist. Versuche der Anmelderin haben gezeigt, dass Zeilen von gegeneinander versetzt angeordneten Löchern sowohl beim Walzen als auch im Betrieb zu Verzug führen, weil sich dadurch zwischen den Zeilen ein gewundener oder mäanderförmiger Stegverlauf, hingegen in Spaltenrichtung ein geradliniger Stegverlauf ergibt. Die ungünstige Auswirkung des gewundenen oder mäanderförmigen Stegverlaufes in oder parallel zur Zeilenrichtung ist noch größer, wenn die Löcher jeweils als Langlöcher ausgebildet sind. Solche asymmetrischen Löcher werden beim Walzen nämlich in Richtung quer zu ihrer Länge bevorzugt auseinander gezogen. Der gewundene oder mäanderförmige Stegverlauf hat zur Folge, dass das Material der unteren Deckschicht beim Walzen oder im Betrieb ähnlich wie Streckmetall in Zeilenrichtung oder parallel zur Zeilenrichtung auseinandergezogen wird.

Wenn in einer weiteren Ausgestaltung des Mehrschichtmaterials nach der Erfindung die innere Schicht aus Aluminium besteht und die beiden Deckschichten aus rostfreiem Stahlblech bestehen, lässt sich das an und für sich zum Einsatz von Strahlungs- oder Kontaktwärmequellen bzw. von Strahlungs- oder Kontaktkältequellen ausgebildete Mehrschichtmaterial nach der Erfindung ohne weiteres auch induktiv beheizen. Darüber hinaus erfüllt Mehrschichtmaterial, bei dem die Deckschichten aus rostfreiem Stahlblech bestehen, die Hygienevorschriften bei der Speisenzubereitung am Besten.

Wenn in einer weiteren Ausgestaltung des Mehrschichtmaterials nach der Erfindung die Löcher wenigstens etwa zwei Drittel der Fläche der unteren Deckschicht einnehmen, liegt zwischen den gegensätzlichen Anforderungen an die untere Deckschicht, sich einerseits nicht zu verziehen, andererseits aber Wärme oder Kälte gut auf die innere Schicht zu übertragen, ein tragbarer Kompromiss vor.

Wenn in einer weiteren Ausgestaltung des Mehrschichtmaterials nach der Erfindung die beiden Deckschichten so ausgebildet sind, dass sie etwa die gleiche Masse haben, ergibt sich für die beiden vorgenannten gegensätzlichen Forderungen der beste Kompromiss.

Wenn in einer weiteren Ausgestaltung des Mehrschichtmaterials nach der Erfindung die obere Deckschicht dünner als die untere Deckschicht ist, lässt sich am besten die an sich bestehende Forderung erfüllen, dass im Hinblick auf den zu erzielenden Kompromiss die beiden Deckschichten aus der gleichen Menge an Material bestehen oder die gleiche Masse aufweisen sollten. Andernfalls müssten zur Erfüllung dieser Forderung für die beiden Deckschichten Materialien unterschiedlicher Dichte eingesetzt werden, was im Hinblick auf die vorgenannten Hygieneanforderungen schwieriger realisierbar wäre.

Grundsätzlich gilt, dass die Wärmeübertragung von der unteren Schicht auf die obere Schicht umso besser ist, je größer die Fläche der Löcher in der unteren Schicht ist. Die untere Schicht dient zwar ohnehin nicht zur wirksamen Wärmeübertragung zu der oberen Schicht (sie ist dabei eher hinderlich), sie wird gleichwohl aber benötigt, um Zug aufzunehmen und ein Verziehen des Mehrschichtmaterials im Betrieb und beim bevorzugten Herstellen desselben durch Walzen zu verhindern.

Ausführungsbeispiele der Erfindung werden im Folgenden unter Bezugnahme auf die Zeichnung näher beschrieben. Darin zeigt
- Fig. 1: eine Ansicht der Unterseite eines Mehrschichtmaterials nach der Erfindung und
- Fig. 2: einen Schnitt nach der Linie II-II in Fig. 1.

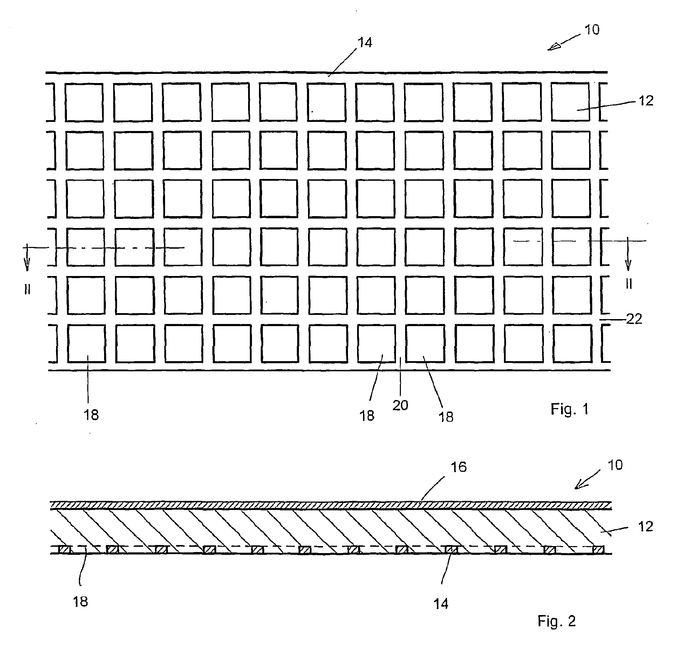

In den Fig. 1 und 2 ist ein metallisches Mehrschichtmaterial insgesamt mit 10 bezeichnet. Es wird als Flächenmaterial beliebiger Größe durch Walzen hergestellt und zum Einsatz als Heiz- oder Kühlplatte, insbesondere bei der Speisenzubereitung, auf die gewünschte Plattengröße zugeschnitten. Das Mehrschichtmaterial 10 ist mit wenigstens einer dicken inneren Schicht 12 aus einem gut wärmeleitenden Material wie zum Beispiel Aluminium und wenigstens einer dünneren unteren und oberen Deckschicht 14 bzw. 16 versehen. Die beiden Deckschichten 14, 16 bestehen vorzugsweise aus rostfreiem Stahlblech. Bei Verwendung des Mehrschichtmaterials als Grillplatte bildet die obere Fläche der oberen Deckschicht 16 die Grillfläche. Je nach Bedarf können mehrere Blechschichten die untere Deckschicht 14 und/oder die obere Deckschicht 16 bilden. Die untere Deckschicht 14 weist eine Vielzahl von Löchern 18 auf. In dem in der Zeichnung dargestellten Ausführungsbeispiel sind die Löcher 18 mit Material der inneren Schicht 12 bündig ausgefüllt. Das wird durch den Walzvorgang erreicht, bei dem das vorzugsweise weichere metallische Material der inneren Schicht 12 in die Löcher 18 der vorzugsweise aus härterem Material bestehenden unteren Deckschicht 14 eingewalzt. Es wäre ausreichend, wenn das Material der inneren Schicht 12 die Löcher 18 danach wenigstens teilweise ausfüllt, also bei dem Walzvorgang wenigstens auf einem Teil der Dicke der unteren Deckschicht 14 in die Löcher 18 der unteren Deckschicht 14 eingedrungen ist. Die obere Schicht 16 des Mehrschichtmaterials 10 dient als Arbeitsfläche (zum Beispiel als Grillfläche) und darf daher keine Löcher aufweisen. Eine ausreichende Befestigung zwischen der oberen Schicht 16 und der inneren Schicht 12 wird durch den Walzvorgang ohnehin erzielt. Hingegen dient der Einsatz von Lochblech als untere Deckschicht 14 hauptsächlich der Verbesserung des Wärmeübergangs nicht nur von der unteren Deckschicht 14 her, sondern zusätzlich auch von der unteren Seite der inneren Schicht 12 her im Bereich der Löcher 18, wo die innere Schicht 12 freiliegt, bis zu der oberen Deckschicht 16. Das ist weiter unten noch näher erläutert.

Die Löcher 18 weisen jeweils den Umriss eines regelmäßigen Vielecks auf, bei dem es sich in dem dargestellten Ausführungsbeispiel um ein Quadrat handelt. Definitionsgemäß sind bei einem regelmäßigen Vieleck alle Seiten gleich lang und alle Innenwinkel gleich groß, und jedem regelmäßigen Vieleck lässt sich ein Kreis einbeschreiben (Inkreis), der sämtliche Vieleckseiten als Tangenten besitzt, und ein Kreis umschreiben (Umkreis), auf dem sämtliche Ecken des Vielecks liegen (vgl. Meyers Lexikon der Technik und der exakten Naturwissenschaften, 1970, S. 2658). Die Löcher 18 sind in zueinander rechtwinkeligen Spalten und Zeilen gleichmäßig verteilt angeordnet, wie es Fig. 1 ohne weiteres erkennen lässt. Aufgrund dessen sind Stege 20 zwischen den Spalten von Löchern 18 und Stege 22 zwischen den Zeilen von Löchern 18 geradlinig ausgebildet und rechtwinkelig zueinander angeordnet. Das bietet, wie eingangs erläutert, in Verbindung mit der Ausbildung der Löcher als regelmäßige Vielecke die beste Gewähr, dass ein Verzug des Mehrschichtmaterials und insbesondere der unteren Schicht 14 weder beim Walzen noch im Betrieb auftreten wird. Die Löcher 18 nehmen wenigstens etwa zwei Drittel der Fläche der unteren Deckschicht 14 ein. Darüber hinaus sind die beiden Deckschichten 14, 16 so ausgebildet, dass sie etwa die gleiche Masse haben. Wenn die untere Deckschicht 14 und die obere Deckschicht 16 aus dem gleichen Material bestehen, wird zur Erfüllung der vorgenannten Forderung zweckmäßig die obere Deckschicht 16 dünner als die untere Deckschicht 14 ausgebildet. Bei dem in der Zeichnung dargestellten Ausführungsbeispiel haben die beiden Deckschichten 14, 16 die gleiche Dicke. Bei einem von der Anmelderin getesteten Ausführungsbeispiel hatte das Lochblech der unteren Deckschicht 14 eine Dicke von 1,5 mm und das Blech der oberen Deckschicht 16 eine Dicke von 1 mm, wohingegen die quadratischen Löcher 18 eine Seitenlänge von 8 mm hatten. Die Stege 20, 22 hatten jeweils eine Breite von 4 mm. Es hat sich gezeigt, dass sich ein solches Mehrschichtmaterial weder beim Walzen noch im Betrieb verzieht. Bei dem in der Zeichnung dargestellten Ausführungsbeispiel sind die Stege 20, 22 schmaler ausgebildet, weshalb sich ein noch besserer Wärmeübergang von der unteren Deckschicht 14 aus über die innere Schicht 12 in die obere Deckschicht 16 ergeben wird.

Bei dem Einsatz als Heizplatte bei der Speisenzubereitung, zum Beispiel als Grillplatte, wird das Mehrschichtmaterial 10 von der in Fig. 1 sichtbaren Unterseite aus beheizt, vorzugsweise durch Strahlungs- oder Kontaktwärme. Strahlungswärme kann zum Beispiel mit gutem Wirkungsgrad auf das Mehrschichtmaterial 10 übertragen werden, indem eine Gasflamme eingesetzt wird. Hingegen wird Kontaktwärme auf das Mehrschichtmaterial 10 zweckmäßig zum Beispiel dadurch übertragen, dass ein Strahlungsheizkörper an die Unterseite des Mehrschichtmaterials 10 gedrückt wird. In letzterem Fall sollte zweckmäßig das Material der inneren Schicht 12 die Löcher 18 der unteren Deckschicht 14 bündig ausfüllen, wie es in Fig. 2 gezeigt ist. Sollten die Löcher 18 nicht auf der gesamten Dicke der unteren Deckschicht 14 mit Material der inneren Schicht 12 ausgefüllt sein, wäre die Beheizung mittels eines Brenners oder einer Gasflamme zweckmäßiger als durch Kontaktwärmeübertragung. In allen Ausführungsformen des Mehrschichtmaterials 10 kann dieses auch induktiv beheizt werden, sofern es aus induktionsfähigem Material besteht, also zum Beispiel aus einer inneren Schicht 12 aus Aluminium und Deckschichten 14, 16 aus rostfreiem Stahlblech. Da bei einem induktiv beheizten Mehrschichtmaterial die Wärme aber im Inneren desselben entsteht, also nicht durch Wärmeübertragung von der Unterseite der unteren Deckschicht 14 aus eingebracht werden muss, besteht bei induktiver Beheizung kaum die Gefahr des Verziehens des Mehrschichtmaterials, wenn die untere Deckschicht 14 nicht als Lochblech ausgebildet ist.

Statt wie bei den oben beschriebenen Ausführungsbeispielen durch Walzen ist das Mehrschichtmaterial auch durch Gießen herstellbar.

## Patentansprüche

1. Metallisches Mehrschichtmaterial zum Einsatz als Heiz- oder Kühlplatte, insbesondere bei der Speisenzubereitung, das mit wenigstens einer dicken inneren Schicht (12) aus gut wärmeleitendem Material und wenigstens einer dünneren unteren und oberen Deckschicht (14, 16) versehen ist, wobei die untere Deckschicht (14) eine Vielzahl von Löchern (18) aufweist und die obere Deckschicht (16) keine Löcher, **dadurch gekennzeichnet, dass** die Löcher (18) jeweils wenigstens zum Teil mit Material der inneren Schicht (12) gefüllt sind und dass die beiden Deckschichten (14, 16) so ausgebildet sind, dass sie etwa die gleiche Masse haben.

2. Mehrschichtmaterial nach Anspruch 1, **dadurch gekennzeichnet, dass** die Löcher (18) mit Material der inneren Schicht (12) bündig ausgefüllt sind.

3. Mehrschichtmaterial nach Anspruch 1 oder 2, **dadurch gekennzeichnet, dass** die Löcher (18) jeweils den Umriss eines regelmäßigen Vielecks aufweisen.

4. Mehrschichtmaterial nach einem der Ansprüche 1 bis 3, **dadurch gekennzeichnet, dass** die Löcher (18) in zueinander rechtwinkeligen Spalten und Zeilen gleichmäßig verteilt angeordnet sind.

5. Mehrschichtmaterial nach einem der Ansprüche 1 bis 4, **dadurch gekennzeichnet, dass** die innere Schicht (12) aus Aluminium besteht und dass die beiden Deckschichten (14, 16) aus rostfreiem Stahlblech bestehen.

6. Mehrschichtmaterial nach einem der Ansprüche 1 bis 5, **dadurch gekennzeichnet, dass** die Löcher (18) wenigstens etwa zwei Drittel der Fläche der unteren Deckschicht (14) einnehmen.

7. Mehrschichtmaterial nach einem der Ansprüche 1 bis 6, **dadurch gekennzeichnet, dass** die obere Deckschicht (16) dünner als die untere Deckschicht (14) ist.

## Claims

1. A metallic multilayer material for use as a heating or cooling plate, in particular for food preparation, which is provided with at least one thick inner layer(12) of a material conducting heat well and at least one thinner lower and upper cover layer (14, 16), said lower cover layer (14) including a plurality of holes (18) and said upper cover layer (16) being devoid of holes,
**characterized in that** each of said holes (18) is filled with material of the inner layer (12) at least in part and that the two cover layers (14, 16) are configured to have about the same mass.

2. The multilayer material according to claim 1, **characterized in that** the holes (18) are filled flush with material of the inner layer (12).

3. The multilayer material according to claim 1 or 2, **characterized in that** each of the holes (18) has the contour of a regular polygon.

4. The multilayer material according to anyone of the claims 1 to 3, **characterized in that** the holes (18) are arranged in a uniformly distributed pattern, forming columns and lines at right angles to each other.

5. The multilayer material according to any one of the claims 1 to 4, **characterized in that** the inner layer (12) is made of aluminum and that both cover layers (14, 16) consist of stainless sheet steel.

6. The multilayer material according to any one of the claims 1 to 5, **characterized in that** the holes (18) occupy at least about two thirds of the area of the lower cover layer (14).

7. The multilayer material according to any one of the claims 1 to 6, **characterized in that** the upper cover layer (16) is thinner than the lower cover layer (14).

## Revendications

1. Matériau métallique multicouches pour l'utilisation comme plaque chauffante ou plaque de refroidissement, notamment pour la préparation d'aliments, qui est pourvu d'au moins une couche intérieure épaisse (12) en matériau bon conducteur de chaleur et d'au moins une couche de recouvrement inférieure et supérieure plus fine (14, 16), la couche de recouvrement inférieure (14) présentant une pluralité de trous (18) et la couche de recouvrement supérieure (16) ne présentant pas de trous, **caractérisé en ce que** les trous (18) sont respectivement remplis au moins partiellement du matériau de la couche intérieure (12), et **en ce que** les deux couches de recouvrement (14, 16) sont conçues de telle sorte qu'elles possèdent environ la même masse.

2. Matériau multicouches selon la revendication 1, **caractérisé en ce que** les trous (18) sont remplis du matériau de la couche intérieure (12) à fleur.

3. Matériau multicouches selon la revendication 1 ou 2, **caractérisé en ce que** les trous (18) présentent respectivement le contour d'un polygone régulier.

4. Matériau multicouches selon l'une des revendications 1 à 3, **caractérisé en ce que** les trous (18) sont disposés en étant uniformément répartis en lignes et colonnes mutuellement perpendiculaires.

5. Matériau multicouches selon l'une des revendications 1 à 4, **caractérisé en ce que** la couche intérieure (12) est constituée d'aluminium, et **en ce que** les deux couches de recouvrement (14, 16) sont constituées de tôle d'acier inoxydable.

6. Matériau multicouches selon l'une des revendications 1 à 5, **caractérisé en ce que** les trous (18) occupent au moins environ deux tiers de la surface de la couche de recouvrement inférieure (14).

7. Matériau multicouches selon l'une des revendications 1 à 6, **caractérisé en ce que** la couche de recouvrement supérieure (16) est plus mince que la couche de recouvrement inférieure (14).
